# EUROPEAN PATENT SPECIFICATION

(11) **EP 4 295 664 B1**
(45) Date of publication and mention of the grant of the patent: **26.11.2025**
(21) Application number: 23178449.7
(22) Date of filing: 09.06.2023
(51) Int. Cl.: A01F 15/00, B65B 11/04, A01F 15/07

(54) **AGRICULTURAL BALER**
LANDWIRTSCHAFTLICHE BALLENPRESSE
PRESSE À BALLES AGRICOLE

(30) Priority: 24.06.2022 GB 202209333
(43) Date of publication of application: 27.12.2023
(73) Proprietor: AGCO International GmbH, 8212 Neuhausen am Rheinfall (CH)
(72) Inventor: SCHLICHTING, Malte Cornelius, 38304 Wolfenbüttel (DE)
(74) Representative: AGCO Intellectual Property Department

(56) References cited:
- US-A- 3 243 138
- US-A- 6 029 420
- US-B2- 10 827 685
- US-B2- 10 926 908

## Description

### CROSS-REFERENCE TO RELATED APPLICATIONS

Not applicable.

### FIELD

The present invention relates to an agricultural round baler, and in particular to improvements in the apparatus for binding or wrapping of formed round bales within a baling chamber of the agricultural round baler.

### BACKGROUND

It is known to provide a reservoir of a wrapping material, such as a plastics film or a netwrap to bind or wrap a formed bale within an agricultural baler. A binding or wrapping apparatus unwinds the wrapping material from a roll and feeds the wrapping material into the baling chamber where it is wrapped around the formed bale as the formed bale rotates within the baling chamber. The flow of wrapping material into the baling chamber is controlled by the rotation of the formed bale in the baling chamber, and the tension in the wrapping material is controlled by a brake device supplying an opposing drag force to the wrapping material.

The tension in the wrapping material is important. Either too great a tension or too little a tension in the wrapping material at different stages of wrapping of the formed bale is undesirable. Further the desired tension in the wrapping material varies during the wrapping cycle. At the beginning of the wrapping process, little or no braking force is required to allow the roll of wrapping material to begin rotation and allow the wrapping material to be fed to the baling chamber. As the wrapping material enters the baling chamber and catches on the formed bale, an increased braking force is required to increase tension. Increasing the tension too quickly or by too much may cause the wrapping material to tear and/or recoil from the baling chamber. Once the bale is wrapped, a braking force is required to create tension in the wrapping material to facilitate a clean cut when the wrapping material is required to be severed.

Accordingly, precise control over the tension in the wrapping material is desirable. It is known to provide a lever running against the roll of wrapping material. In known arrangements, the lever is provided with a potentiometer to measure the angle of deflection of the lever and so determine the diameter of the roll of wrapping material at that time. In this way the amount of wrapping material left on the roll of wrapping material can be calculated and the braking force applied to the roll of wrapping material can be adjusted accordingly. However, suitable potentiometers able to withstand the operating environment of a baler and accurately detect the deflection of the lever (and so provide accurate information allowing the desired control of the braking operation) are an expensive component of such systems.

It is also generally desirable to trace the origin of bales produced by an agricultural baler. To this end, it is known to provide a binding or wrapping material with RFID tags or other electronic identifiers. Typical wrapping materials include baler twine, typically for balers producing square bales and film or net wrapping for binding or wrapping round bales within a baling chamber of round baler prior to ejection of the formed bale from the baling chamber.

Each bale may have multiple electronic identifiers with unique serial numbers, such that a unique identifier is associated with each formed bale. Information about the bale can also be associated with the electronic identifier, either directly by storing the information on the electronic identifiers or indirectly by associating each unique identifier with the information in a database. Such a database can be stored and accessed from any suitable location such as cloud storage or other memory storage. Example information may include, but is not limited to, bale weight, moisture content, geographical location from which the harvested crop was baled, time of baling, number of knives used in processing the harvested crop, kind of wrapping material used.

Typically, the electronic identifiers are incorporated in the wrapping material during manufacture at a fixed distance from one another, typically every 6 meters along the length of the wrapping material.

It is known from US 10 926 908 (Forage Innovations) to add electronic identifiers to a wrapping material as the wrapping material is supplied from a wrapping material reservoir. At least one tag reader is provided within the baler to monitor whether a tag has been moved past the at least one tag reader and to generate an alert if no tag is detected. The purpose of these tags is only to detect whether a web of wrapping material has correctly entered the baling chamber in order to successfully initiate the wrapping process, and not to determine whether a desired tension in the wrapping material is achieved once the wrapping process has successfully been initiated.

It is an advantage of the present invention that the problem of maintaining a desired tension in the wrapping material during binding is addressed.

### BRIEF SUMMARY

According to a first aspect of the present invention, a control system for controlling a braking operation performed by one or more operational components of an agricultural baler on a wrapping material incorporating a plurality of electronic identifiers during the different phases of a wrapping cycle, the control system comprising one or more controllers, and being configured to:
identify the current phase of the wrapping cycle;
receive data indicative of an electronic identifier and determinative of the amount of wrapping material remaining on a roll of wrapping material;
determine, in dependence on the amount of wrapping material remaining on the roll of wrapping material, a diameter of the roll of wrapping material and a braking strategy for performing the braking operation during the current phase of the wrapping cycle; and
generate and output one or more control signals for controlling the braking operation performed by the one or more operational components associated with the baler in dependence on the determined braking strategy.

Preferably the braking strategy comprises one of:
increasing the braking force applied to a wrapping material; or
decreasing the braking force applied to a wrapping material; or
neither increasing or increasing the braking force applied to a wrapping material.

Preferably, the control system further comprises a user interface operable to communicate information indicative of the determined braking strategy to an operator of the agricultural baler. More preferably, the control system is configured to generate and output the one or more control signals for controlling operation of the user interface to communicate the information indicative of the determined braking strategy to an operator of the agricultural baler.

Preferably, the one or more operational components for controlling the braking operation further comprises a electrically controlled braking apparatus for operation in accordance with the determined braking strategy. More preferably, the control system is configured to generate and output the one or more control signals for automatically controlling the electrically controlled braking apparatus to apply a desired braking force to the wrapping material during a wrapping cycle.

Preferably, the control system is configured to:
receive identification data from an electronic identification system associated with the agricultural baler; and
determine a braking strategy in dependence thereon.

More preferably the electronic identification system comprises a reader of the electronic identifier.

Preferably, the electronic identification system is mounted or otherwise coupled to the agricultural baler and configured to monitor electronic identifiers passing into a baling chamber of the agricultural baler.

According to a second aspect, a system for controlling a braking operation performed by one or more controllable components of an agricultural baler on a wrapping material, comprises:
an electrically controlled braking apparatus for applying a desired braking force to a wrapping material passing into a baling chamber of an agricultural baler; and
a control system according to the first aspect configured to control operation of the electrically controlled braking apparatus and/or the wrapping apparatus in accordance with a determined braking strategy.

According to third aspect, an agricultural baler comprises and/or is controllable by the control system of the first aspect, or comprises the system of the second aspect.

According to a fourth aspect, a method of controlling a braking operation performed by one or more controllable components of an agricultural baler on a wrapping material incorporating a plurality of electronic identifiers during different phases of a wrapping cycle, comprises:
identifying the current phase of the wrapping cycle;
receiving data indicative of an electronic identifier and determinative of the amount of wrapping material remaining on a roll of wrapping material;
determining, in dependence on the amount of wrapping material remaining on the roll of wrapping material, a diameter of the roll of wrapping material and a braking strategy for performing the braking operation during the different phases of the wrapping cycle; and
generating and outputting one or more control signals for controlling the braking operation performed by the one or more operational components associated with the baler in dependence on the determined braking strategy.

According to a fifth aspect a computer readable program comprises instructions which, when the program is executed by a computer, causes the baler of the third aspect to implement the method of the fourth aspect.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

The invention will now be described, by way of example only, with reference to the accompanying drawings, in which:
FIG 1 shows a schematic side view of a round baler and a towing vehicle;
FIG 2 shows a elements of an example variable chamber round baler for use with the present invention;
FIG 3 shows a perspective view of elements of a wrapping material storage apparatus for use with the present invention;
FIG 4 shows a free end of a length of a wrapping material;
FIG 5 shows a schematic diagram illustrating an embodiment of a control system in accordance with the invention;
FIG 6 shows a schematic diagram illustrating elements of the agricultural baler; and
FIG 7 shows a flow chart illustrating an exemplary method of the present invention.

### DETAILED DESCRIPTION

The invention will now be described in the following detailed description with reference to the drawings, wherein preferred embodiments are described in detail to enable practice of the invention. Although the invention is described with reference to these specific preferred embodiments, it will be understood that the invention is not limited to these preferred embodiments.

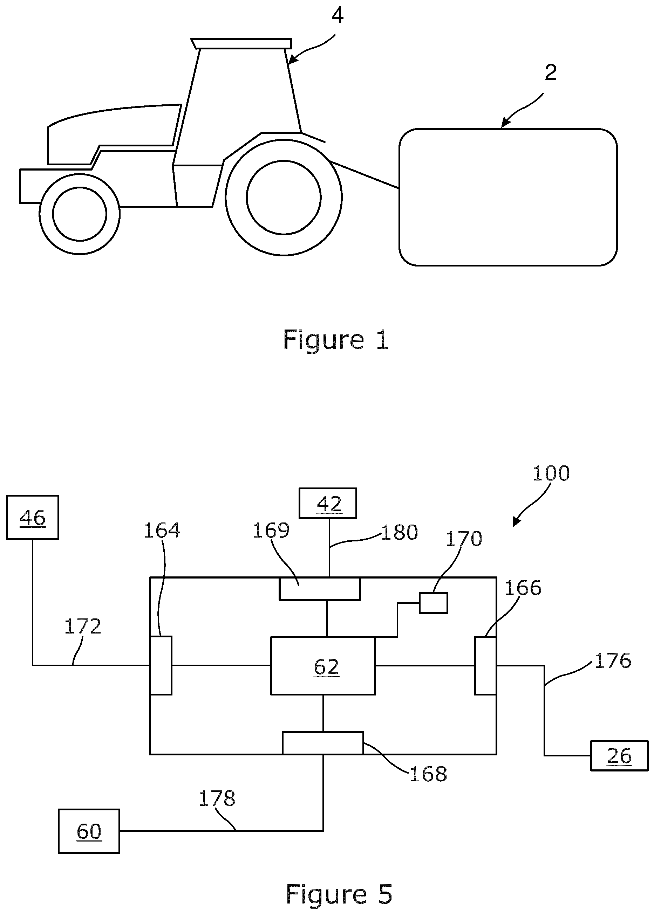

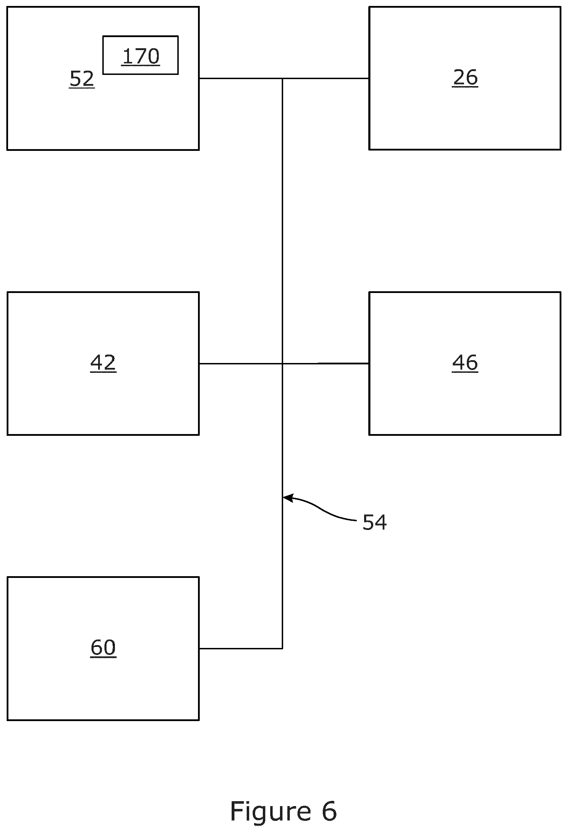

With reference to Figure 1, an agricultural baler 2 is shown connected to an agricultural towing vehicle 4, such as a tractor. Typically, the agricultural baler 2 is connected to a Power Take Off (PTO) of the towing vehicle 4 in order to drive operational elements of the agricultural baler 2. In a round baler for producing bales in a fixed diameter baling chamber, the baling chamber being largely defined by a plurality of suitably arranged rollers, the PTO connection may be used to drive a number of the rollers forming part of the baling chamber. In a round baler 2 having a baling chamber of variable diameter, the PTO connection may be used to power driven rollers driving the endless belts forming the baling chamber. The towing vehicle 4 is also conveniently provided with a terminal having a user interface 60 (FIG 6) by which information relevant to the operation of the towing vehicle 4 and the round baler 2 may be communicated to an operator within the towing vehicle 4.

Electrical power may be taken from the towing vehicle 4 or from a power source carried on the baler 2 and used to power operation of various operational elements of the baler 2.

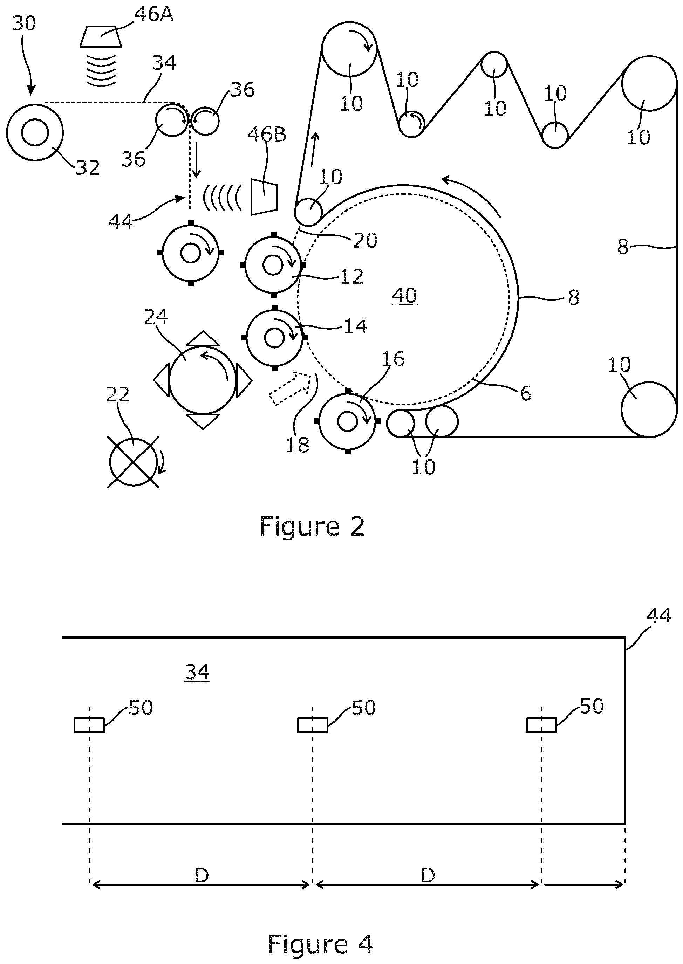

Aspects of an example variable chamber round baler are shown in Figure 2. A baling chamber 6 is defined in part by a series of endless belts 8 wound about a plurality of rollers 10. The rollers 10 comprise both driven and idler rollers, the position of some of the rollers being varied to control the size of the baling chamber 6. The baling chamber 6 is further defined by a pressing roller 12 and first and second starter rollers 14,16. A crop inlet 18 is defined between the first and second starter rollers 14,16 and a wrapping material inlet 20 is defined between the pressing roller 12 and the endless belts 8.

In use, as the baler 2 is towed along a windrow or swath of harvested crop, a rotating pick up unit 22 of the baler 2 gathers up harvested crop and directs the harvested crop to a rotating conveyor rotor 24, the conveyor rotor 24 directing the gathered crop through the crop inlet 18 into the baling chamber 6 of the round baler.

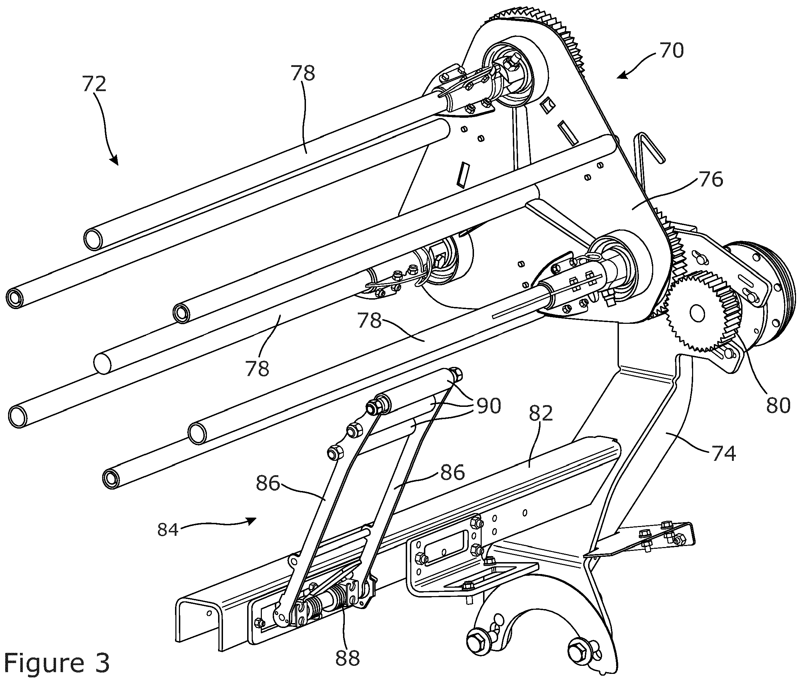

The baler 2 further includes a wrapping material reservoir 30 in which at least one roll 32 of wrapping material 34 is located. While only a single roll of wrapping material is shown, the reservoir 30 may contain rolls of more than one kind of wrapping material to allow an operator to change out the wrapping material depending upon the harvested crop to baled as the operator moves between fields having different crops to be baled (cf FIG 3). In use, the wrapping material 34 extends from the reservoir to a feed apparatus.

In the illustrated embodiment, the feed apparatus comprises a pair of feed rollers 36 and a web supply roller 38.

When a bale 40 of suitable size has been formed in the baling chamber 6, the feed apparatus is actuated to feed a free end of the wrapping material 34 to the wrapping material inlet 20, from where the wrapping material 34 is drawn into the baling chamber 6 to wrap the formed bale 40. In the illustrated embodiment, the feed rollers 36 are actuated to draw the wrapping material 34 from the reservoir 30 and into contact with the web supply roller 38. The web supply roller 38 is driven so as direct a free end of the wrapping material 34 toward the rotating pressing roller 12. The feed apparatus may also be arranged to keep the wrapping material under a desired tension as the wrapping material 34 is drawn into the baling chamber 6. In the illustrated embodiment, this is achieved by controlling the speed of the feed rollers 36 such that the feed rollers 36 serve as an electrically controlled braking apparatus 26. In an alternative embodiment the feed rollers may be omitted and a braking force applied directly to the roll of wrapping material by a suitable electrically controlled braking apparatus to control the speed of rotation of the roll of wrapping material.

Once the formed bale 40 has been sufficiently wrapped, a severing mechanism 42 (cf FIG 6) is actuated to sever the wrapping material 34 such that a first free end 44 is created within the baler 2 (for wrapping or binding of the next formed bale) and a second free end is drawn into the baling chamber 6 to complete wrapping of the formed bale 40.

Figure 3 shows a sectional view of an alternative reservoir or wrapping material storage apparatus 70 for storing of the wrapping material in a baler. The wrapping material storage apparatus 70 comprises a magazine 72 located between side elements 74 (only one of which is shown in Figure 3). The magazine 72 includes first and second end plates 76 (only one of which is shown in Figure 3). A plurality of support elements 78 extend between the end plates 76. Each support element 78 is pivotally connected at a first end to first end plate at a first side of the wrapping material storage apparatus 70 and releasably connected at a second end to the second end plate at the second side of the wrapping material storage apparatus 70.

The side element at the second end of the magazine 72 is provided with an electrically controlled braking apparatus 26 in the form of an electrically controlled braking gear 80.

A cross beam 82 is conveniently provided with a biased lever 84. The biased lever 84 comprises first and second side arms 86. First ends of the side arms 86 are connected by a connecting rod about which a biasing spring 88 is mounted. Second ends of the side arms 86 are connected by a plurality of connecting pins on which are mounted rollers 90. The connecting pins are provided in an arcuate arrangement at the second end of the biased lever 84. In use the lever runs against a deploying roll 32 of wrapping material 34. Currently, the position of the biased lever 84 may be detected by a sensor, typically a potentiometer, such that the amount of wrapping material 34 remaining on the roll 32 may be calculated. By use of the present invention the use of such a sensor may be dispensed with.

It is desirable that the wrapping material 34 should, once being drawn into the baling chamber 6 by the action of the rotating formed bale 40, be subject to pre-stretching to improve wrapping of the formed bale 40. An electronic control unit 52 can be used to control the electrically controlled braking apparatus 26 such that the wrapping material 34 is subject to a desired degree of pre-stretching.

It is further desirable that the wrapping material 34 should, once being drawn into the baling chamber by the action of the rotating bale, be subject to a constant pre-stretching regardless of the diameter of the roll of wrapping material. It is also desirable that the pre-stretching of the wrapping material be increased when severing of the wrapping material by the severing apparatus is required.

As best shown in Figure 4, the wrapping material 34 is provided with a plurality of electronic identifiers 50. The electronic identifiers 50 are regularly spaced a distance D from one another. An electronic identifier 50 is spaced a distance d from the free end 44 of the wrapping material 34.

The baler 22 is further provided with an electronic identification system in the form of a reader 46 for reading of the electronic identifiers 50 forming part of the wrapping material 34. The reader 46 is advantageously located adjacent a free portion of a path of the wrapping material 34. For example, the reader 46 may be located to read the electronic identifiers as the wrapping material is dispensed from the roll of wrapping material (46A in FIG 3) or, alternatively may be located to read the electronic identifiers prior to entry of the wrapping material into the baling chamber (46B in FIG 3).

In this way the reader 46 is able to read and identify each electronic identifier 50, such as an RFID tag, in turn as it passes the reader 46. Each electronic identifier is provided with its identity at the time of manufacture of the wrapping material. On manufacture, winding of the wrapping material about its roll is a reproduceable process (such that each roll of wrapping material will comprise a known number of electronic identifiers having a known spacing) and the geometry between the points at which the reader reads and identifies each electronic identifier in use is known. Accordingly, it is possible to determine the roll diameter and the amount of any wrapping material remaining on the roll of wrapping material during the wrapping cycle by reading and identifying the electronic identifiers passing the reader 46.

Alternatively, since each roll will have the same number of electronic identifiers the diameter of the roll of wrapping material can be determined by making a count of the number of electronic identifiers passing the reader 46 following loading of roll of wrapping material into reservoir or wrapping material storage apparatus 70.

The baler 2 is typically provided with an electronic control unit 52. The electronic control unit 52 may comprise one or more processors. The processor (or processors) may be located on the baler 2 and be in communication with one or more processors located elsewhere (for example on the towing vehicle 4 or remote from the baler/towing vehicle combination). The various processors may communicate with one another over a network 54 by any suitable means.

The electronic control unit 52 is in communication with apparatus adapted to calculate the length of wrapping material 34 consumed from the reservoir. This information is used to ensure that a certain number of layers of wrapping material 34 are wrapped around the formed bale 40. In accordance with the invention, such apparatus may include the electronic identifiers 50 passing the reader 46.

As shown in Figure 5, an example control system 100 comprises an electronic control unit 52 having an electronic processor 162 associated with the baler 2, and electronic inputs 164 and electronic outputs 166,168,169. The electronic processor 162 is operable to access a memory 170 associated with the electronic control unit 152 and execute instructions stored therein to perform the steps and functionality of the present invention, e.g. by controlling the user interface 60, to indicate, e.g. to an operator of the baler 2, information indicative of the operation of the baler 2 including information regarding consumption of the wrapping material 34 and/or a degree of wrapping of the formed bale 40 in the baling chamber 6.

The electronic control unit 52 is operable to receive sensor data via input 164 which, in the illustrated embodiment, takes the form of input signals 172 received from the reader 46. Utilising this data, the processor 162 is configured to analyse the data and determine therefrom information regarding the wrapping of the formed bale 40. In particular, this information is used to determine a braking strategy for the baler 2.

As described above, the electronic control unit 52 includes an electronic output 166 configured to output control signals 176 generated by the processor 162 for controlling operation of the electrically controlled braking apparatus 26. Specifically, the processor 162 is operable to generate, and the electronic control unit 152 operable to then output via output 168, control signals 176 for controlling operation of the electrically controlled braking apparatus 26 as determined by the braking strategy. As will be appreciated, the electronic control unit 52 may output the control signals 176 to a local processing unit, for controlling operation of the electrically controlled braking apparatus 26.

Output 168 is operably coupled to the user interface 60 of the baler 2. Here, the control system 100 is operable to control operation of the user interface 60, e.g. through output of control signals 178 in order to display data to an operator of the baler 2 relating to the operation of the control system 100. Specifically, the control system 100 is operable to control the user interface 60 to communicate to the operator an indicator of the braking strategy, for example by displaying information regarding consumption of the wrapping material 34 and/or a degree of wrapping of the formed bale 40 in the baling chamber 6, and/or whether any adjustment to the degree of wrapping of the formed bale 40 has been required.

Output 169 is configured to output control signals 180 generated by the processor 162 for controlling operation of the severing apparatus 42. Specifically, the processor 162 is operable to generate, and the electronic control unit 152 operable to then output via output 169, control signals 180 for controlling operation of the severing apparatus 42. As will be appreciated, the electronic control unit 52 may output the control signals 180 to a local processing unit, for controlling operation of the severing apparatus 42.

### Example 1

A fresh roll 32 of wrapping material 34 is loaded into the baler 2. Information about the separation distance D of the electronic identifiers 50 and the number of electronic identifiers in a roll 32 of wrapping material is known. For example, such information may be provided by the manufacturer of the wrapping material. The operator inputs this information into the system, for example by entering the information into the user terminal 60 in the tractor 4 or by entering the information into application software on a mobile telephone or similar apparatus.

Similarly, information regarding the kind of wrapping material may be input by the operator into the system, for example by entering the information into the user terminal 60 in the tractor 4 or by entering the information into application software on a mobile telephone or similar apparatus. Alternatively, a sensor may be provided to determine the kind of wrapping material and suitable signals sent to the electronic control unit 52.

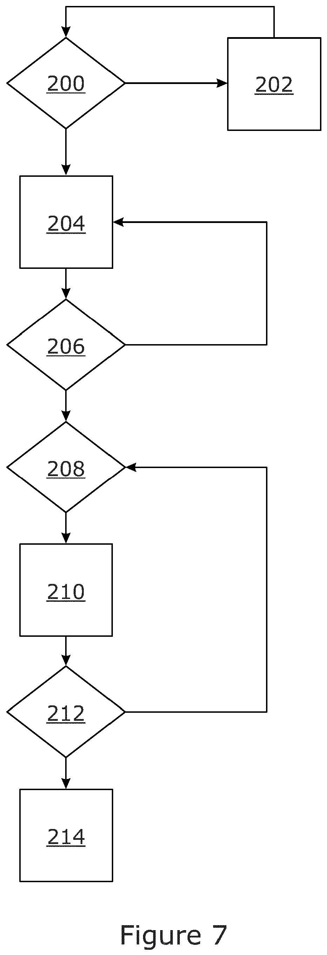

An example wrapping cycle will now be described with reference to FIG 7. The electronic control unit 52 determines whether a bale 40 of suitable size has been formed in the baler 2 (step 200). If the bale is not yet of a desired size, no action is taken to commence the wrapping cycle and forming of the bale continues (step 202). If a bale of suitable size has been formed, baling is discontinued and the electronic control unit causes dispense of the wrapping material to commence (step 204).

The processor(s) 62 then determines whether, based on the electronic identifiers 50 detected by the reader 46, sufficient wrapping material has been dispensed in order for the wrapping material to snag on the formed bale within the baling chamber (step 206). This may be performed by a count of the number of electronic identifiers 50 passing the reader 48. Alternatively, since the distance between adjacent electronic identifiers 50 is known, the processor may monitor the time between detection of adjacent electronic identifiers 50, there being an increase in speed of the wrapping material passing the reader once such snagging has occurred. Alternatively, both may be measured and the processor can determine whether an increase in speed has occurred once a suitable length of wrapping material has been deployed, and if this condition is not met, generate an output signal to the user terminal 60 indicating a possible error condition.

Once the wrapping material is determined to have snagged on the formed bale, the processor(s) 60 is able to determine the diameter of the roll of binding material (step 208) and send output signals 176 to cause the electronically controlled braking apparatus 26 to apply a desired braking force (step 210), for example by reference to a lookup table or the like stored in the memory 170 associating a desired braking force for a given diameter of a roll of a given binding material.

The processor(s) 60 determines whether sufficient wrapping material has been deployed to sufficiently wrap the formed bale (step 212). If insufficient wrapping has occurred, the processor(s) continues to determine the diameter of the roll of binding material (step 208) and send output signals 176 to cause the electronically controlled braking apparatus 26 to apply a desired braking force (step 210) altering the braking force applied to the wrapping material as required by the braking strategy (for example by reference to the lookup table or the like stored in the memory 170).

If insufficient wrapping has occurred, the processor(s) 162 causes the braking force to be increased and actuates the severing mechanism 42 (214).

Reading of the electronic identifiers 50 in this way also allows the processor(s) 162 to calculate when the roll of wrapping material 34 will be exhausted and need replacement, for example by a count of the electronic identifiers 50 passing the reader 46 and comparing to a known number of electronic identifiers 50 on a full roll 32 of wrapping material 34.

Further, should an operator need to swap between rolls of wrapping material, for example between a roll of netwrap and a roll of plastics film, due to a preference for a different kind of wrapping material when wrapping a formed bale of a particular crop material, the processor(s) 162 can store the details of the last detected electronic identifier 50 for a partially consumed roll of wrapping material in an associated memory or display relevant details to an operator such that the operator can input these details if called upon at a later time. Such relevant details may include the number of electronic identifiers 50 and meterage of wrapping material 34 already used, the number of electronic identifiers 50 remaining (and corresponding meterage of wrapping material 34 remaining).

Alternatively, the processor 162 records in the memory 170 the identity of the last electronic identifier 50 identified on a roll 32 of wrapping material. If the roll 32 of wrapping material is not changed then, since serial numbers of electronic identifiers are incremental (where the electronic identifier is an RFID tag), when the baler 2 resumes use of the partially consumed roll 32 of wrapping material 34, the processor 52 can refer to the memory 170 and pick up details of the partially consumed roll of wrapping material.

## Claims

1. A control system for controlling a braking operation performed by one or more operational components of an agricultural baler (2) on a wrapping material (34) incorporating a plurality of electronic identifiers (50) during the different phases of a wrapping cycle, the control system comprising one or more controllers (52), and being configured to:
identify the current phase of the wrapping cycle;
receive data indicative of an electronic identifier (50) and determinative of the amount of wrapping material (34) remaining on a roll (32) of wrapping material (34);
determine, in dependence on the amount of wrapping material (34) remaining on the roll (32) of wrapping material (34), a diameter of the roll (32) of wrapping material (34) and a braking strategy for performing the braking operation during the current phase of the wrapping cycle; and
generate and output one or more control signals (176) for controlling the braking operation performed by the one or more operational components associated with the baler in dependence on the determined braking strategy.

2. A control system according to claim 1, **characterised in that** the braking strategy comprises one of:
increasing the braking force applied to a wrapping material; or
decreasing the braking force applied to a wrapping material; or
neither increasing or increasing the braking force applied to a wrapping material.

3. A control system according to claim 1 or claim 2, **characterised in that** the control system further comprises a user interface (60) operable to communicate information indicative of the determined braking strategy to an operator of the agricultural baler (2).

4. A control system according to claim 3, **characterised in that** the control system is configured to generate and output the one or more control signals (178) for controlling operation of the user interface (60) to communicate the information indicative of the determined braking strategy to an operator of the agricultural baler (2).

5. A control system according to any of claim 1 to claim 4, **characterised in that** the one or more operational components for controlling the braking operation further comprises a electrically controlled braking apparatus (26) for operation in accordance with the determined braking strategy.

6. A control system according to claim 5, **characterised in that** the control system is configured to generate and output the one or more control signals (176) for automatically controlling the electrically controlled braking apparatus (26) to apply a desired braking force to the wrapping material during a wrapping cycle.

7. A control system according to any of claim 1 to claim 6, **characterised in that** the control system is configured to:
receive identification data from an electronic identification system associated with the agricultural baler (2) ; and
determine a braking strategy in dependence thereon.

8. A control system according to claim 7, **characterised in that** the electronic identification system comprises a reader (46) of the electronic identifier (50).

9. A control system according to claim 7 or claim 8, **characterised in that** the electronic identification system is mounted or otherwise coupled to the agricultural baler (2) and configured to monitor electronic identifiers (50) passing into a baling chamber (6, 46B) of the agricultural baler (2).

10. A system for controlling a braking operation performed by one or more controllable components of an agricultural baler (2) on a wrapping material (34), comprises:
an electrically controlled braking apparatus (26) for applying a desired braking force to a wrapping material (34) passing into a baling chamber (6) of an agricultural baler (2); and
a control system according to any of claim 1 to claim 9 configured to control operation of the electrically controlled braking apparatus (26) and/or the wrapping apparatus in accordance with a determined braking strategy.

11. An agricultural baler (2) comprising and/or controllable by the control system of any of claim 1 to claim 9, or comprising the system of claim 10.

12. A method of controlling a braking operation performed by one or more controllable components of an agricultural baler (2) on a wrapping material (34) incorporating a plurality of electronic identifiers (50) during different phases of a wrapping cycle, comprises:
identifying the current phase of the wrapping cycle;
receiving data indicative of an electronic identifier (50) and determinative of the amount of wrapping material (34) remaining on a roll (36) of wrapping material (34);
determining, in dependence on the amount of wrapping material (34) remaining on the roll (36) of wrapping material (34), a diameter of the roll (34) of wrapping material (34) and a braking strategy for performing the braking operation during the different phases of the wrapping cycle; and
generating and outputting one or more control signals for controlling the braking operation performed by the one or more operational components associated with the baler (2) in dependence on the determined braking strategy.

13. A computer readable program comprises instructions which, when the program is executed by a computer, causes the baler (2) of claim 11 to implement the method of claim 12.

## Patentansprüche

1. Steuersystem zum Steuern eines Bremsbetriebs, der von mindestens einer Betriebskomponente einer landwirtschaftlichen Ballenpresse (2) während der verschiedenen Phasen eines Wickelzyklus an einem Wickelmaterial (34) ausgeführt wird, das mehrere elektronische Identifizierer (50) aufweist, wobei das Steuersystem mindestens einen Controller (52) aufweist und konfiguriert ist, um
die aktuelle Phase des Wickelzyklus zu identifizieren;
Daten zu empfangen, die einen elektronischen Identifizierer (50) indizieren und die Menge des Wickelmaterials (34), welches auf einer Rolle (32) des Wickelmaterials (34) verbleibt, bestimmen;
in Abhängigkeit von der Menge des Wickelmaterials (34), welches auf der Rolle (32) des Wickelmaterials (34) verbleibt, einen Durchmesser der Rolle (32) des Wickelmaterials (34) und eine Bremsstrategie für die Durchführung des Bremsbetriebs während der aktuellen Phase des Wickelzyklus zu ermitteln; und
mindestens ein Steuersignal (176) zur Steuerung des Bremsbetriebs, der durch die mindestens eine Betriebskomponenten, die der Ballenpresse zugeordnet ist, ausgeführt wird, in Abhängigkeit von der ermittelten Bremsstrategie zu erzeugen und auszugeben.

2. Steuersystem nach Anspruch 1, **dadurch gekennzeichnet, dass** die Bremsstrategie umfasst:
ein Erhöhen der Bremskraft, die auf ein Wickelmaterial aufgebracht wird, oder
ein Verringern der Bremskraft, die auf ein Wickelmaterial aufgebracht wird, oder
weder Erhöhen noch Verringern der Bremskraft, die auf ein Wickelmaterial aufgebracht wird.

3. Steuersystem nach Anspruch 1 oder Anspruch 2, **dadurch gekennzeichnet, dass** das Steuersystem des Weiteren ein Nutzer-Interface (60) aufweist, welches betreibbar ist zur Kommunikation von Informationen, die die ermittelte Bremsstrategie indizieren, an einen Betreiber der landwirtschaftlichen Ballenpresse (2).

4. Steuersystem nach Anspruch 3, **dadurch gekennzeichnet, dass** das Steuersystem dazu konfiguriert ist, das mindestens eine Steuersignal (178) zur Steuerung des Betriebs des Nutzer-Interfaces (60) zu generieren und auszugeben zur Kommunikation der Informationen, die die ermittelte Bremsstrategie indizieren, an einen Betreiber der landwirtschaftlichen Ballenpresse (2).

5. Steuersystem nach einem der Ansprüche 1 bis 4, **dadurch gekennzeichnet, dass** die mindestens eine Betriebskomponenten zum Steuern des Bremsbetriebs des Weiteren eine elektrisch gesteuerte Bremseinrichtung (26) für einen Betrieb entsprechend der ermittelten Bremsstrategie aufweist.

6. Steuersystem nach Anspruch 5, **dadurch gekennzeichnet, dass** das Steuersystem dazu konfiguriert ist, das mindestens eine Steuersignal (176) zu erzeugen und auszugeben für eine automatische Steuerung der elektrisch gesteuerten Bremseinrichtung (26) zur Aufbringung einer gewünschten Bremskraft auf das Wickelmaterial während eines Wickelzyklus.

7. Steuersystem nach einem der Ansprüche 1 bis 6, **dadurch gekennzeichnet, dass** das Steuersystem dazu konfiguriert ist,
Identifikationsdaten von einem elektronischen Identifikationssystem, welches der landwirtschaftlichen Ballenpresse (2) zugeordnet ist, zu empfangen; und
in Abhängigkeit hiervon eine Bremsstrategie zu ermitteln.

8. Steuersystem nach Anspruch 7, **dadurch gekennzeichnet, dass** das elektronische Identifikationssystem einen Lesegerät (46) für den elektronischen Identifizierer (50) aufweist.

9. Steuersystem nach Anspruch 7 oder Anspruch 8, **dadurch gekennzeichnet, dass** das elektronische Identifikationssystem an der landwirtschaftlichen Ballenpresse (2) montiert ist oder anderweitig mit dieser gekoppelt ist und dazu konfiguriert ist, elektronische Identifizierer (50) zu überwachen, die in die Ballenkammer (6, 46B) der landwirtschaftlichen Ballenpresse (2) eintreten.

10. System zum Steuern eines Bremsbetriebs, der durch mindestens eine steuerbare Komponente einer landwirtschaftlichen Ballenpresse (2) an einem Wickelmaterial (34) ausgeführt wird, mit:
einer elektrisch gesteuerten Bremseinrichtung (26) zur Aufbringung einer gewünschten Bremskraft auf ein Wickelmaterial (34), welches in eine ballenbildende Kammer (6) einer landwirtschaftlichen Ballenpresse (2) eintritt; und
einem Steuersystem nach einem der Ansprüche 1 bis 9, welches dazu konfiguriert ist, den Betrieb der elektrisch gesteuerten Bremseinrichtung (26) und/oder der Wickeleinrichtung entsprechend einer ermittelten Bremsstrategie zu steuern.

11. Landwirtschaftliche Ballenpresse (2) mit dem Steuersystem nach einem der Ansprüche 1 bis 9 oder steuerbar durch dieses oder mit dem System nach Anspruch 10.

12. Verfahren zur Steuern eines Bremsbetriebs, der während unterschiedlicher Phasen eines Wickelzyklus durch mindestens eine steuerbare Komponente einer landwirtschaftlichen Ballenpresse (2) an einem Wickelmaterial (34), welches mehrere elektronische Identifizierer (50) aufweist, ausgeführt wird, mit:
einem Identifizieren der aktuellen Phase des Wickelzyklus;
einem Empfangen von Daten, die einen elektronischen Identifizierer (50) indizieren und die Menge des Wickelmaterials (34), welches auf einer Rolle (36) des Wickelmaterials (34) verbleibt, bestimmen;
einem Ermitteln eines Durchmessers der Rolle (34) des Wickelmaterials (34) und einer Bremsstrategie zur Durchführung des Bremsbetriebs während der unterschiedlichen Phasen des Wickelzyklus in Abhängigkeit von der Menge des Wickelmaterials (34), welches auf der Rolle (36) des Wickelmaterials (34) verbleibt; und
Erzeugen und Ausgeben mindestens eines Steuersignals zur Steuerung des Bremsbetriebs, der von der mindestens einen Betriebskomponente, die der Ballenpresse (2) zugeordnet ist, ausgeführt wird, in Abhängigkeit von der ermittelten Bremsstrategie.

13. Computerlesbares Programm mit Instruktionen, die bei Ausführung des Programms durch einen Computer verursacht, dass die Ballenpresse (2) nach Anspruch **11** das Verfahren nach Anspruch 12 implementiert.

## Revendications

1. Dispositif de commande destiné à commander une opération de freinage exécutée par un ou plusieurs composants opérationnels d'une presse à balle agricole (2) sur un matériau d'emballage (34) incorporant une pluralité d'identificateurs électroniques (50) au cours des différentes phases d'un cycle d'emballage, le dispositif de commande comprenant une ou plusieurs unités de commande (52) et étant configuré de manière à :
identifier la phase courante du cycle d'emballage ;
recevoir des données indicatives d'un identificateur électronique (50) et représentatives de la quantité de matériau d'emballage (34) restant sur un rouleau (32) de matériau d'emballage (34) ;
déterminer, en fonction de la quantité de matériau d'emballage (34) restant sur un rouleau (32) de matériau d'emballage (34), un diamètre du rouleau (32) de matériau d'emballage (34) et une stratégie de freinage afin d'exécuter l'opération de freinage au cours de la phase courante du cycle d'emballage ; et
produire et délivrer un ou plusieurs signaux de commande (176) afin de commander l'opération de freinage exécutée par les uns ou plusieurs composants opérationnels associés à la presse à balle en fonction de la stratégie de freinage déterminée.

2. Dispositif de commande selon la revendication 1, **caractérisé en ce que** la stratégie de freinage comprend une action parmi :
L'augmentation de l'effort de freinage appliqué sur un matériau d'emballage ; ou
la réduction de l'effort de freinage appliqué sur un matériau d'emballage ; ou
aucune de l'augmentation ou de la réduction de l'effort de freinage appliqué sur un matériau d'emballage.

3. Dispositif de commande selon la revendication 1 ou 2, **caractérisé en ce que** le dispositif de commande comprend, en outre, une interface d'utilisateur (60) pouvant être utilisée afin de communiquer des informations représentatives de la stratégie de freinage déterminée à un opérateur de la presse à balle agricole (2).

4. Dispositif de commande selon la revendication 3, **caractérisé en ce que** le dispositif de commande est configuré de manière à produire et à délivrer les uns ou plusieurs signaux de commande (178) destinés à commander le fonctionnement de l'interface d'utilisateur (60) afin de communiquer les informations représentatives de la stratégie de freinage déterminée à un opérateur de la presse à balle agricole (2).

5. Dispositif de commande selon l'une quelconque des revendications 1 à 4, **caractérisé en ce que** les uns ou plusieurs composants opérationnels destinés à commander l'opération de freinage comprennent, en outre, un dispositif de freinage commandé électriquement (26) afin d'assurer l'opération en fonction de la stratégie de freinage déterminée.

6. Dispositif de commande selon la revendication 5, **caractérisé en ce que** le dispositif de commande est configuré de manière à produire et à délivrer les uns ou plusieurs signaux de commande (176) destinés à commander automatiquement le dispositif de freinage commandé électriquement (26) afin d'appliquer un effort de freinage désiré sur le matériau d'emballage au cours d'un cycle d'emballage.

7. Dispositif de commande selon l'une quelconque des revendications 1 à 6, **caractérisé en ce que** le dispositif de commande est configuré de manière à :
recevoir des données d'identification à partir d'un dispositif d'identification électronique associé à la presse à balle agricole (2) ; et
déterminer une stratégie de freinage en fonction de ces dernières.

8. Dispositif de commande selon la revendication 7, **caractérisé en ce que** le dispositif d'identification électronique comprend un lecteur (46) de l'identificateur électronique (50).

9. Dispositif de commande selon la revendication 7 ou 8, **caractérisé en ce que** le dispositif d'identification électronique est monté sur la presse à balle agricole (2) ou couplé d'une autre manière à cette dernière et configuré de manière à contrôler les identificateurs électroniques (50) passant dans un compartiment de formation de balle (6, 46B) de la presse à balle agricole (2).

10. Dispositif destiné à commander une opération de freinage exécutée par un ou plusieurs composants pouvant être commandés d'une presse à balle agricole (2) sur un matériau d'emballage (34), comprenant :
un dispositif de freinage commandé électriquement (26) destiné à appliquer un effort de freinage désiré sur un matériau d'emballage (34) passant dans un compartiment de formation de balle (6) d'une presse à balle agricole (2) ; et
un dispositif de commande selon l'une quelconque des revendications 1 à 9 configuré de manière à commander le fonctionnement du dispositif de freinage commandé électriquement (26) et/ou du dispositif d'emballage en fonction d'une stratégie de freinage déterminée.

11. Presse à balle agricole (2) comprenant le dispositif de commande selon l'une quelconque des revendications 1 à 9 et/ou pouvant être commandé par ce dernier, ou comprenant le dispositif selon la revendication 10.

12. Procédé destiné à commander une opération de freinage exécutée par un ou plusieurs composants pouvant être commandés d'une presse à balle agricole (2) sur un matériau d'emballage (34) incorporant une pluralité d'identificateurs électroniques (50) au cours de différentes phases d'un cycle d'emballage, comprenant :
L'identification de la phase courante du cycle d'emballage ;
la réception de données indicatives d'un identificateur électronique (50) et représentatives de la quantité de matériau d'emballage (34) restant sur un rouleau (36) de matériau d'emballage (34) ;
la détermination, en fonction de la quantité de matériau d'emballage (34) restant sur le rouleau (36) de matériau d'emballage (34), d'un diamètre du rouleau (32) de matériau d'emballage (34) et d'une stratégie de freinage afin d'assurer l'exécution de l'opération de freinage au cours des différentes phases du cycle d'emballage ; et
la production et la transmission d'un ou plusieurs signaux de commande afin de commander l'opération de freinage exécutée par les uns ou plusieurs composants opérationnels associés à la presse à balle (2) en fonction de la stratégie de freinage déterminée.

13. Programme pouvant être lu par un ordinateur comprenant des instructions qui, lorsque le programme est exécuté par un ordinateur, amènent la presse à balle agricole (2) selon la revendication 11 à mettre en œuvre le procédé selon la revendication 12.
